# EUROPEAN PATENT SPECIFICATION

(11) **EP 2 359 656 B1**
(45) Date of publication and mention of the grant of the patent: **14.10.2015**
(21) Application number: 08876332.1
(22) Date of filing: 29.12.2008
(51) Int. Cl.: H04W 72/12, H04W 28/10

(54) **ADAPATIVE UPLINK RATE CONTROL IN A WIRELESS COMMUNICATION SYSTEM**
ADAPTIVE AUFWÄRTSSTRECKENRATENSTEUERUNG IN EINEM DRAHTLOSEN KOMMUNIKATIONSSYSTEM
RÉGULATION ADAPTATIVE DE DÉBIT DE LIAISON MONTANTE DANS UN SYSTÈME DE COMMUNICATION SANS FIL

(30) Priority: 23.09.2008 US 99287 P
(43) Date of publication of application: 24.08.2011
(73) Proprietor: Telefonaktiebolaget L M Ericsson (PUBL), 164 83 Stockholm (SE)
(72) Inventor: NÁDAS, Szilveszter, H-1192 Budapest (HU); RÁCZ, Sándor, H-2700 Cegléd (HU); NAGY, Zoltán, H-6723 Szeged (HU); LUNDH, Peter, S-127 61 Skärholmen (SE)
(74) Representative: Ericsson
(86) International application number: PCT/SE2008/051566
(87) International publication number: WO 2010/036169

(56) References cited:
- EP-A- 1 718 007
- US-A1- 2005 281 219
- WEERAWARDANE T ET AL: "A Markovian Model for HSDPA TNL Congestion Control Performance Analysis" VEHICULAR TECHNOLOGY CONFERENCE, 2008. VTC 2008-FALL. IEEE 68TH, IEEE, PISCATAWAY, NJ, USA, 21 September 2008 (2008-09-21), pages 1-6, XP031352503 ISBN: 978-1-4244-1721-6
- YASIR ZAKI ET AL: "Effect of the RLC and TNL congestion control on the HSUPA network performance" COMMUNICATIONS, COMPUTERS AND APPLICATIONS, 2008. MIC-CCA 2008. MOSHARAKA INTERNATIONAL CONFERENCE ON, IEEE, PISCATAWAY, NJ, USA, 8 August 2008 (2008-08-08), pages 1-7, XP031360400 ISBN: 978-9927-486-02-0
- QIUYAN XIA ET AL: "Cross Layer Design for the IEEE 802.11 WLANs: Joint Rate Control and Packet Scheduling" IEEE TRANSACTIONS ON WIRELESS COMMUNICATIONS, IEEE SERVICE CENTER, PISCATAWAY, NJ, US, vol. 6, no. 7, 1 July 2007 (2007-07-01), pages 2732-2740, XP011187624 ISSN: 1536-1276
- ALLMAN NASA LEWIS/STERLING SOFTWARE V PAXSON LBNL W STEVENS CONSULTANT M: "TCP Congestion Control; draft-ietf-tcpimpl-cong-control-05.txt" IETF STANDARD-WORKING-DRAFT, INTERNET ENGINEERING TASK FORCE, IETF, CH, vol. tcpimpl, no. 5, 1 February 1999 (1999-02-01), XP015028926 ISSN: 0000-0004

## Description

### TECHNICAL FIELD

The present invention relates to a method and an arrangement in a communication network system. In particular it relates to a mechanism for providing additive exponential increase for rate-based HSPA flow control.

### BACKGROUND

The main architectural novelty of High Speed Downlink Packet Access (HSDPA) is that the control of radio frame scheduling has been moved from Radio Network Controller (RNC) to Node Bs. While fix capacity such as e.g. 64 kbps may be reserved for traditional Dedicated Channel (DCH) traffic in the access network, for HSDPA, per flow bandwidth reservation is not efficient, because air interface throughput is much higher and fluctuates more. If bandwidth reservation is not used then congestion situation may occur both in the transport network and in the air interface. In the current architecture, TCP cannot efficiently resolve a congestion situation in the access network, because lower layer retransmissions hide the congestion situations from TCP. Thus a flow control function has been introduced to control the data transfer between the RNC and Node B.

The Flow Control (FC) was designed to take only the transmission capabilities of the air interface into account and to limit the latency of layer 2 signalling. However, the increased air interface capacity did not always come with similarly increased lub transport network capacity in practice. lub is the interface between the Node B and an RNC. The cost of lub transport links is still high and is not expected to decrease dramatically. It is a common scenario that the throughput is limited by the capacity available on the lub Transport Network (TN) links and not by the capacity of the air interface. On these high cost links it is important to maintain high efficiency.

Similarly, for Enhanced UpLink (EUL) the uplink radio scheduling has been moved to the Node B. The EUL traffic has similar properties to that of HSDPA, though it may reach somewhat lower bitrates. For EUL it was identified at the beginning that the TN is a potential bottleneck and the DATA FRAME information and required control frames were introduced in Third Generation Partnership Project (3GPP) standards.

While on the air interface it is the task of the air interface scheduler to share the bandwidth among the flows, on lub it is the task of the FC to provide fair bandwidth sharing among the flows of the same priority.

For both HSDPA and EUL Flow Control, a rate-based flow control must be used, because the lack of sequence numbering and retransmission in the 3GPP standard does not allow a window based flow control, like TCP. Note that while Radio Link Control (RLC) in the 3G system provides sequence numbering and retransmission functionality, the RLC protocol layer is not terminated in Node B, therefore cannot be used for Flow Control purposes. By rate based flow control is meant that the bitrate of a flow is regulated by the Flow Control algorithm.

For the existing rate-based per-flow FC solutions, the linear increase speed in Congestion Avoidance state is optimized for a capacity of around 1-4 Mbps. The linear increase speed is 40 kbps/s, which means that e.g. it takes 25 s to increase the existing bitrate with 1 Mbps. It may not be a problem when the number of users in the system is stable, because a flow may find the available bitrate in the initial state. However, in several cases when the lub transport network capacity suddenly increases it might take too long time for a flow to adapt to the available bitrate. An example for such an increase is when there are only two flows on the bottleneck link and one of them leaves the system. The problem becomes more severe with evolved HSPA rates and higher and higher speed transport network links.

Simply increasing the linear rate of increase would lead to instability of the control algorithm, while a multiplicative increase of the bitrate of a flow would lead to unfairness or complete starvation. Also to meet the AIMD property, the increase algorithm must be the same for all flows which might share the same bottleneck, which means that in practice it must be the same in the whole system, where there may be very low and very high speed transport network links.

Further, a similar problem may happen for HSDPA Flow Control in case of fluctuating air interface bitrates. The problem is different in the sense that while for the lub transport network bottleneck it is the task of the HSDPA flow control to provide fairness among the flows, for the air interface bottleneck it is the task of the air interface scheduler.

Window based flow controls may fast adapt to sudden changes concerning the traffic in a bottleneck link, using the self clocking property. However this property requires long buffers, which might not always be present. Even if they are present, the end-to-end delay is increased. Also window based flow control cannot be used in the HSDPA or EUL architecture, because that does not fit to the standardized protocols.

Further, WEERAWARDANE T ET AL: "A Markovian Model for HSDPA TNL Congestion Control Performance Analysis" VEHICULAR TECHNOLOGY CONFERENCE, 2008. VTC 2008-FALL. IEEE 68TH, IEEE, PISCATAWAY, NJ, USA, 21 September 2008 (2008-09-21), pages 1-6, ISBN: 978-1-42441721-6 relates to developing an analytical model for HSDPA congestion control (CC) performance analysis where an analytical model which is based on the Embedded Markov Chain with Multiple Departures (EMC-MD) is developed to analyse the effect of CC for the HSUPA performance. This analytical model includes all the important functionalities of the congestion control at Transport Network Layer (TNL) level. This paper also shows that the results from the analytical model are in agreement with the simulation results and that the analytical model can be effectively used to analyse the effect of parameters on performance of the HSDPA network and can be used dimensioning of the parameters.

Finally, YASIR ZAKI ET AL: "Effect of the RLC and TNL congestion control on the HSUPA network performance" COMMUNICATIONS, COMPUTERS AND APPLICATIONS, 2008. MIC-CCA 2008. MOSHARAKA INTERNATIONAL CONFERENCE ON, IEEE, PISCATAWAY, NJ, USA, 8 August 2008 (2008-08-08), pages 1-7, ISBN: 978-9927-486-02-0 relates to the impact of the Radio Link Control protocol (RLC) combined with the lub congestion control on the performance of High Speed Uplink Packet Access (HSUPA) networks. The paper investigates the performance enhancement achieved by the RLC AM (Acknowledged Mode) with the deployment of the lub congestion control in the HSUPA network.

### SUMMARY

It is therefore an object of the present invention to provide an improved performance in a wireless communication system.

According to a first aspect, the object is achieved by a method in a Radio Base Station for controlling the bitrate flow in a Radio Access Network. The Radio Base Station is comprised within the Radio Access Network. The Radio Base Station is adapted to control the bitrate flow of the incoming traffic to the Radio Base Station. The method comprises setting the allowed bitrate flow of the incoming traffic to a predetermined constant speed value. Also, the method comprises detecting the occurrence of traffic congestion within the Radio Access Network. If no traffic congestion is detected, the method comprises increasing the allowed bitrate flow by adding the previously set bitrate flow to a linear increase rate factor. In addition the method comprises setting the allowed bitrate flow to the increased allowed bitrate flow. Further yet, the method comprises computing an increased linear increase rate factor by multiplying the previously set linear increase rate factor with a predetermined bitrate increase factor. Additionally, the method comprises repeating the steps of increasing and setting the allowed bitrate flow, at a predetermined periodicity until a predetermined condition is met.

According to a second aspect, the object is also achieved by an arrangement in a Radio Base Station for controlling the bitrate flow in a Radio Access Network. The Radio Base Station is comprised within the Radio Access Network. The Radio Base Station is adapted to control the bitrate flow of the incoming traffic to the Radio Base Station. The arrangement comprises a set unit, which unit is adapted to set the allowed bitrate flow of the incoming traffic. Also, the arrangement comprises a detection unit. The detection unit is adapted to detect the occurrence of traffic congestion within the Radio Access Network. Further, the arrangement comprises an incrementing unit. The incrementing unit is adapted to increase the allowed bitrate flow by adding the previously set bitrate flow to a linear increase rate factor. Still further, the arrangement comprises a computing unit. The computing unit is adapted to compute an increased linear increase rate factor by multiplying the previously set linear increase rate factor with a predetermined bitrate increase factor. Additionally, the arrangement comprises a repeating unit. The repeating unit is adapted to increase and set the allowed bitrate flow, at a predetermined periodicity until a predetermined condition is met.

The proposed solution keeps the Additive Increase Multiplicative Decrease (AIMD) property, and consequently the fairness, of the original solution, while greatly improving the adaptation speed.

The concept may be applied for standardized HSDPA and EUL flow control solutions.

The fast ramp-up makes it unnecessary to maintain timers to identify whether a user is air interface of transport network limited. The timers which may be removed are the hsProhibitBoostingTimer for HDSPA FC and prohibitFastlncreaseTimer for EUL FC. It is an advantage, because the optimal setting of these timers is depending on actual transport network and air interface capacity and configuration. The actual bottleneck may be still determined, if needed, by comparing the actual shaping/granted rate and the lub reference bitrate.

Thereby, an improved performance in a wireless communication system is provided as a consequence of the present improved mechanism for providing additive exponential increase for rate-based HSPA flow control.

Other objects, advantages and novel features of the invention will become apparent from the following detailed description of the invention.

### BRIEF DESCRIPTION OF THE DRAWINGS

The present invention will now be described more in detail in relation to the enclosed drawings, in which:
- Figure 1: is a schematic block diagram illustrating a wireless communication system.
- Figure 2: is a block diagram illustrating an HSDPA flow control architecture and protocol stack, according to some embodiments.
- Figure 3: is a block diagram illustrating a EUL flow control architecture and protocol stack, according to some embodiments.
- Figure 4: is a flow chart illustrating a first half of a HSDPA Flow Control, according to some embodiments.
- Figure 5: is a flow chart illustrating a second half of a HSDPA Flow Control, according to some embodiments.
- Figure 6: is a block diagram illustrating embodiments of an EUL flow control architecture.
- Figure 7: is a flow chart illustrating embodiments of method steps in a radio base station.
- Figure 8: is a block diagram illustrating embodiments of an arrangement in a radio base station.

### DETAILED DESCRIPTION

The invention is defined as a method and an arrangement in a radio base station, which may be put into practice in the embodiments described below. This invention may, however, be embodied in many different forms and should not be constructed as limited to the embodiments set forth herein; rather, these embodiments are provided so that this disclosure will be thorough and complete, and will fully convey the scope of the invention to those skilled in the art. It should be understood that there is no intent to limit the present methods and/or arrangements to any of the particular forms disclosed, but on the contrary, the present methods and arrangements are to cover all modifications, equivalents, and alternatives falling within the scope of the invention as defined by the claims.

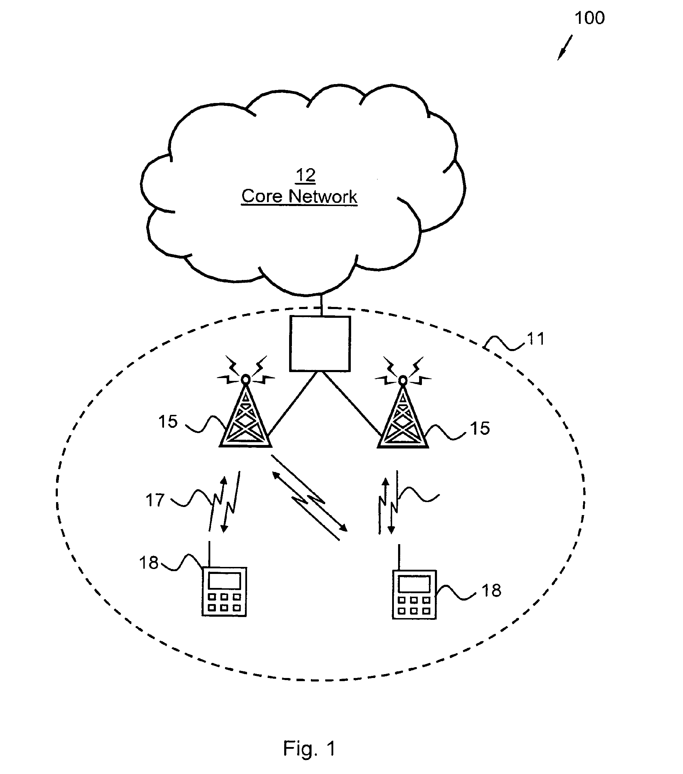

**Figure 1** depicts a communication system 100 comprising a Radio Access Network (RAN) 11, such as the UMTS Terrestrial Radio Access Network (UTRAN) architecture, comprising at least one Radio Base Station (RBS) 15 connected to one or more Radio Network Controllers (RNCs) 10. Two radio base stations 15 are illustrated in Figure 1. The radio access network 11 is connected to a Core Network (CN) 12, also comprised within the communication system 100. The radio access network 11 and the Core Network 12 provide communication and control for a plurality of user equipments (UE) 18 that each uses downlink (DL) channels 16 and uplink (UL) channels 17.

For the reason of clarity, only one uplink channel is denoted 17 and one downlink channel denoted 16. On the downlink channel 16, the radio base station 15 transmits to each user equipment 18 at respective power level. On the uplink channel 17, the user equipments 18 transmit data to the radio base station 15 at respective power level.

According to some embodiment of the present invention, the communication system 100 is herein described as a HSDPA communication system. The skilled person, however, realizes that the inventive method and arrangement may be based on other packet based communications systems as well such as e.g. E-UTRAN, LTE, Code division multiple access (CDMA), Wideband Code Division Multiple Access (WCDMA), CDMA 2000, High Speed Uplink Packet Data Access (HSUPA), High Data Rate (HDR), TD-SCDMA, Wimax, etc.

The user equipment 18 may be represented by e.g. a mobile station, a wireless communication terminal, a mobile cellular telephone, a Personal Communications Systems terminal, a Personal Digital Assistant (PDA), a laptop, a computer, user equipment (UE) or any other kind of device capable of managing radio resources. A Personal Communication System terminal may combine a cellular radiotelephone with data processing, facsimile and data communications capabilities. A PDA may include a radiotelephone, a pager, an Internet/intranet access device, a web browser, an organizer, calendars etc. a mobile telephone ("cellular" telephone) and/or laptop with mobile termination and thus may be, for example, portable, pocket, hand-held, computer-included or car-mounted mobile devices which communicate voice and/or data with the radio access network.

The radio base station 15 may in some embodiments be referred to as an access point, a Node B, an evolved Node B (eNodeB) and/or a base transceiver station, Access Point Base Station, base station router, etc depending e.g. of the radio access technology and terminology used.

The number of components illustrated in Figure 1 is purely exemplary. Other configurations with more, fewer, or a different arrangement of components may be implemented. Moreover, in some embodiments, one or more components in Figure 1 may perform one or more of the tasks described as being performed by one or more other component in Figure 1.

The present invention proposes a solution in the area of HSDPA Flow Control. It proposes an improvement to transport network congestion detection and avoidance. The improvement proposes to use a measurement of incoming bitrate to determine the reduction of bitrate after a transport network congestion event. The advantage is that high bitrate reduction is only used when it is necessary; otherwise only small bitrate reduction is used, which results in small oscillation, and consequently higher transport network utilization.

Thus, according to some embodiments, a rate-based congestion control algorithm is provided, where the increase rate is reset to a constant speed after congestion detection and increased by a factor after a certain condition is met. The certain condition may be e.g. a timer expired, an amount of data arrived and/or an amount of acknowledgements arrived.

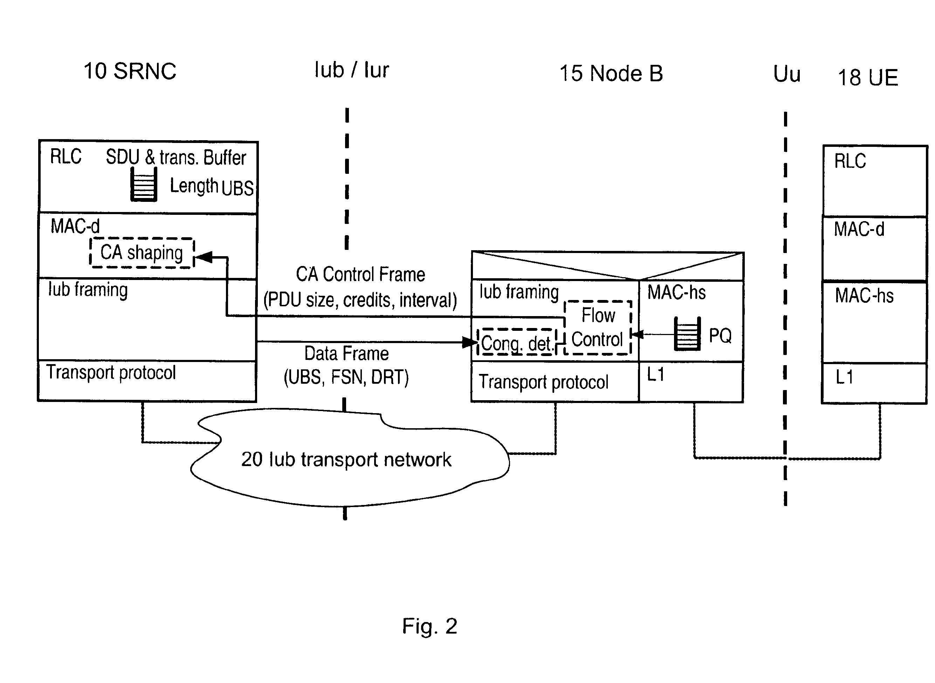

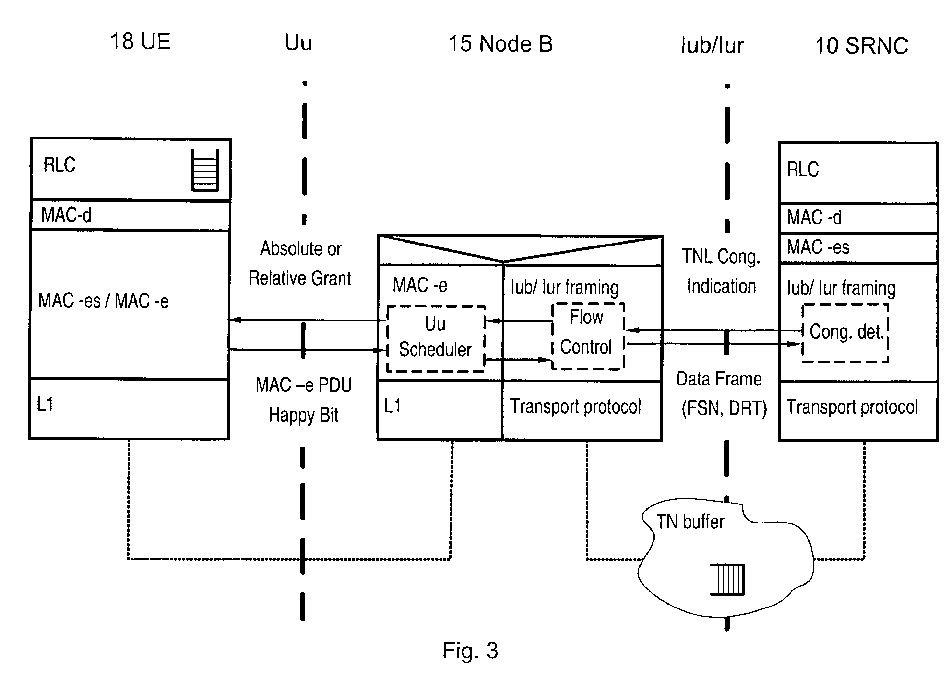

**Figures 2** and **Figure 3** illustrates an HSDPA and EUL Flow Control architecture and protocol stack, respectively.

It is thus illustrated a communication system 100 comprising a Serving Radio Network Controller (SRNC) 10. The Radio Network Controller 10 is a network element that may be responsible for the control of radio resources of the network 11. The SRNC 10 is controlling a radio base station 15 over a lub/lur interface. The radio base station 15 is in turn communicating with the user equipment 18 over an air interface Uu. The Uu interface may be an air interface, through which the user equipment 18 accesses the fixed parts of the system 100 over the radio base station 15.

To allow a simple and flexible flow control solution, a per-flow flow control algorithm is defined both for HSDPA and EUL.

These algorithms both have an initial state, where the algorithm may find an initial capacity level fast. This state is finished when the first congestion is detected. This state may be called "slow start" for HSDPA. For EUL the air interface scheduler regulates the bitrate ramp-up until congestion in the transport network 20 is detected.

After the first congestion has been detected, both algorithms behave similarly. The allowed bitrate of a flow is reduced multiplicatively, e.g. by 50% if a transport network congestion is detected and increased linearly if no congestion is detected for a while, e.g. with 40 kbps/s increase rate. This behaviour is according to the Additive Increase Multiplicative Decrease (AIMD) property and therefore the bandwidth share of the flows converges to the fair situation.

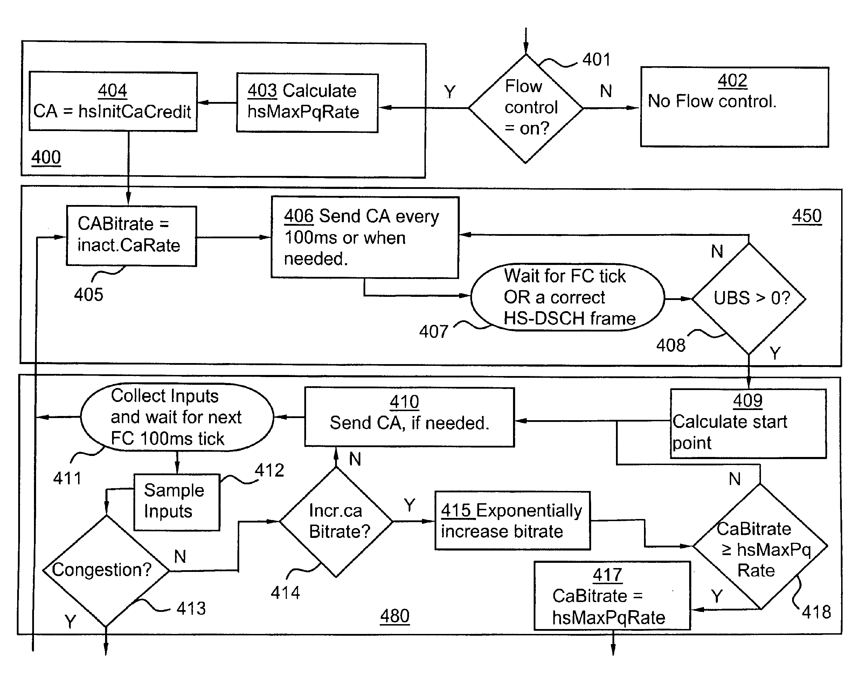

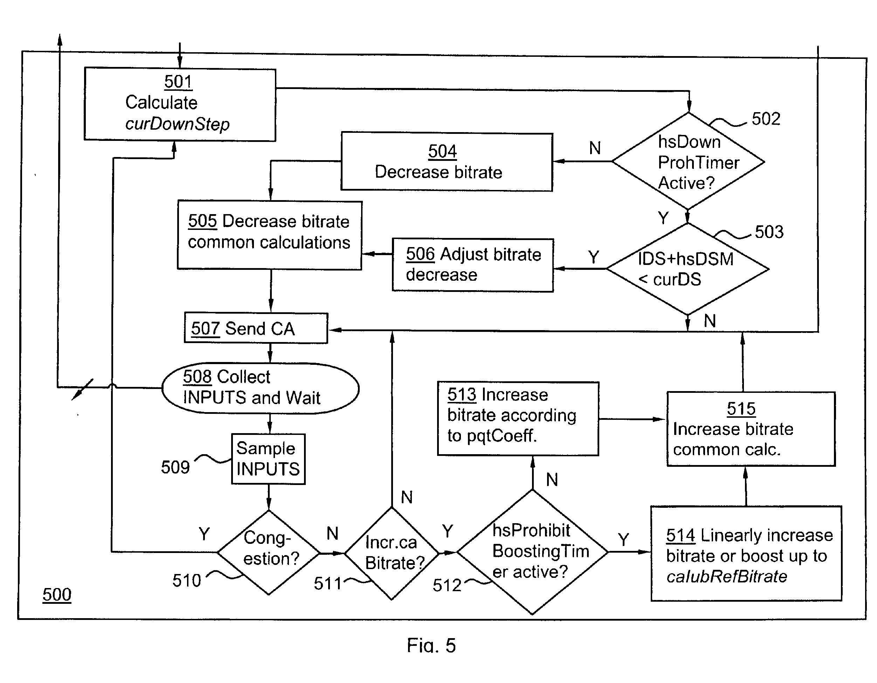

**Figure 4** and **Figure 5** illustrates the upper and lower half, respectively, of a HSDPA flow control flow chart.

On the upper half of the HSDPA flow control flow chart in Figure 4 is three functional blocks presented: PQF Initiation 400, Inactive state 450 and Slow Start 480.

Figure 5 illustrates the lower half of the HSDPA flow control flow chart comprising a Congestion Avoidance mechanism 500.

### Concept of the method

According to the present method, an additive exponential increase is proposed in the Congestion Avoidance state 500. The increase is additive because it does not depend on the actual bitrate of the flow. It is exponential because the increase speed is regularly increased with a factor when no congestion is detected. At initialization or when congestion is detected, the increase speed is reset to a constant value. The increase rate may be gradually increased with a factor, if no congestion is detected.

The present method keeps the Additive Increase Multiplicative Decrease (AIMD) property, and consequently the fairness, of the original solution, while greatly improves the adaptation speed.

### Method steps 401-418

When a high speed flow is being established, a control is performed in a first method step 401 if the flow control is activated or not. If the Flow control is deactivated, no flow control is performed. No capacity allocation control frames are sent. In a method step 402, flow control off measurements may be performed.

If the flow control is activated, the PQF Initialisation 400 may be started. In a method step 403, *hsMaxPqRate* may be calculated, based on Uu and lub limitations. In a following step 404 may an initial Capacity Allocation (CA) be set to *hsInitCaCredit.* In a subsequent method step 405, the *caBitrate* may be set to *inactiveCaRate.* In step 406 may a capacity allocation be sent every 100 ms, or when needed. In a step 407 it may be waited for flow control 100 ms tick or a correctly received HS-DSCH data frame. It may then be controlled in step 408 if the User Buffer Size (UBS) is bigger than zero. If not, the method may jump back to step 406. If the user buffer size is bigger than zero, the start point may be calculated in a method step 409. Also, *hsRecPduOctets* are reset and *hsSsStartPoint* may be calculated such that *caBitrate* may be set to *hsSsStartPoint,* according to some embodiments.

Thereafter, a capacity allocation may be sent, if needed in a step 410. Thereafter, in a subsequent method step 411, inputs are collected and it may be waited for the next flow control 100 ms tick. Inputs may be sampled in a step 412 and a control may be performed if congestion has occurred in a step 413. If not, it may be controlled if a *caBitrate* increase is possible in a step 414. If not, the method may jump back to method step 410. If the *caBitrate* may be increased, the *caBitrate* may be exponentially increased in a method step 415. Thus the *caBitrate* may be doubled, and *hsRecPduOctets* may be reset, according to some embodiments.

In step 418, it may be controlled if *caBitrate* is bigger than *hsMaxPqRate.* If not, the method may return to method step 410. If *caBitrate* is bigger than *hsMaxPqRate,* the *caBitrate* may be set to *hsMaxPpRate* in a step 417, according to some embodiments.

### Method steps 501-515

After step 417, and/or step 413 if congestion is detected, the Congestion Avoidance state 500 is entered. After step 417, the capacity allocation may be sent in a step 507. If congestion is detected in method step 413, *curDownStep* may be calculated based on different congestion events such as e.g. soft, hard or Uu. The *calubRefBitrate* may be set accordingly in a step 501. Thereafter, a control may be made if the *hsDownProhibitTimer* is active in step 502. If it is, it may be further controlled if *LastDownStep* and *hsDownStepMargin* is smaller than *curDownStep* in a step 503. If it is, the bitrate decrease may be adjusted in step 506. Thus the *caBitrate* may be set to one minus *curDownStep* multiplied by *lastRateBeforeDownStep.* Thereafter, bitrate common calculations may be decreased in a method step 505. Thereafter, the capacity allocation may be sent in step 507, if needed. In step 509, inputs may be sampled and in a step 510 a congestion controlled may be performed. If congestion is detected, a method jump may be made back to method step 501. If no congestion is detected, yet a further control may be made if a *caBitrate* increase is possible in a step 511. If it is, it may be controlled if boosting is disabled. Thus it may be controlled if *caBitrate* is bigger than *calubRefBitrate* in step 512. If it is not, a boost up, up to *calubRefBitrate* may be performed. Thus *caBitrate* may be set to maximum *caBitrate* plus *caIncRate* and/or minimum *caBitrate* multiplied by *pqtCoeff* and/or to *calubRefBitrate* in step 513. Otherwise, *caBitrate* may be set to *caBitrate* + *caIncRate* and thus additively increase bitrate in a step 514. Bitrate common calculations may then be increased in a method step 515. Accordingly, *hsRecPduOctets* may be reset and *caIncRate* may be increased. Thereafter, the method may return to step 507 and send a capacity allocation, if needed, according to some embodiments.

### Time-dependent increase rate (ExpResetIncrease)

In the present solution the additive increase property of the flow control may be kept, but time-dependent increments may be used, instead of a linear increase with speed of 40 kbps/s (*caLinIncRate*).

If *caBitrate* increase is possible in congestion avoidance state 500, then the increment may be multiplied with e.g. 1.2, which may be the parameter used according to the present method in the communication system 100. However, according to some embodiments this parameter may be larger such as e.g. 1.3, 1.5, 2.0, 5.0, 10 etc. If congestion has been detected, the increase rate may be reset to 40 kbps/s. An advantage of this kind of increase may be the faster adaptation to the new available bandwidth.

It is to be noted that the HSDPA Flow Control may start in slow-start state where the bitrate is increased very fast. But after the first congestion has occurred and been detected, the flow control turns into Congestion Avoidance state 500 and in this state when there is no congestion the HSDPA Flow Control may increase the rate with 40 kbps/s, according to some embodiments.

### Basic properties

An Additive Increase & Multiplicative Decrease (AIMD) Flow Control converges to fair share. The proposed time-dependent increase rate may not destroy this convergence, because it keeps the additive increase.

In a best case scenario, the increase rate may be increased after every 400 ms, according to some embodiments. However, due to e.g. other timing property of the flow control, e.g. 100 ms tick of the flow control, the gap between two increases may be about 500 ms.

The ramp-up speed of the bitrate for different parameters is according to the present method increased. According to embodiments of the present method, wherein the parameter 1.2 may be used, only 9 s may be needed for increasing the bitrate with 5 Mbps, assuming 500 ms increase circle.

According to some embodiments of the present method, a new variable *caIncRate,* which equals to the variable *caLinIncrRate* at initialization, may be introduced. Also, a new system constant *caAdditiveRateIncFactor,* which by default may be set to 1.2 may be introduced.

The introduced system constant *caAdditiveRateIncFactor* may determine how fast the *caIncRate* is increased after each *caBitrate* increase. The *caIncRate* variable may replace the constant *caLinIncrRate* in cases when *caBitrate* is increased. These cases are further presented and discussed in detail below.

The above described method may alternatively, according to some embodiments, be described in the following way, according to some alternative ways of expressions.

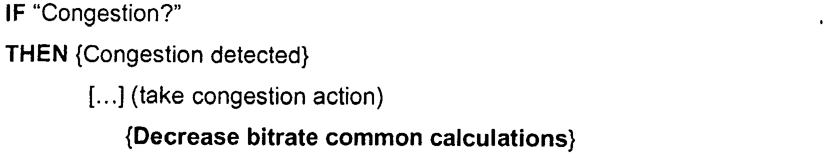

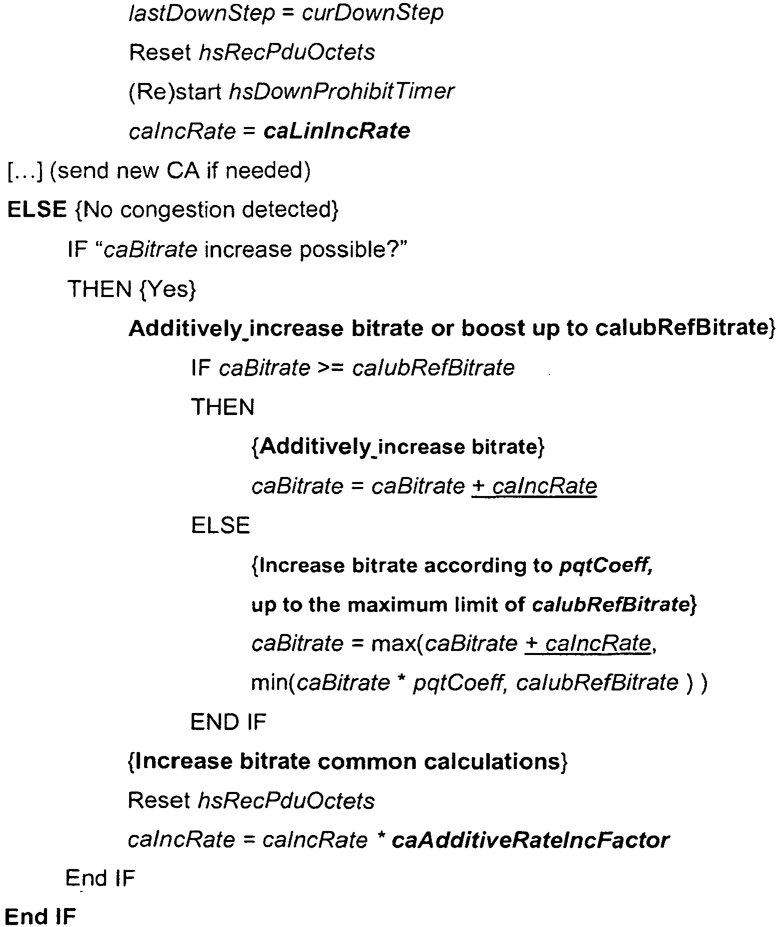

Perform flow chart box "Send CA, if needed", etc.

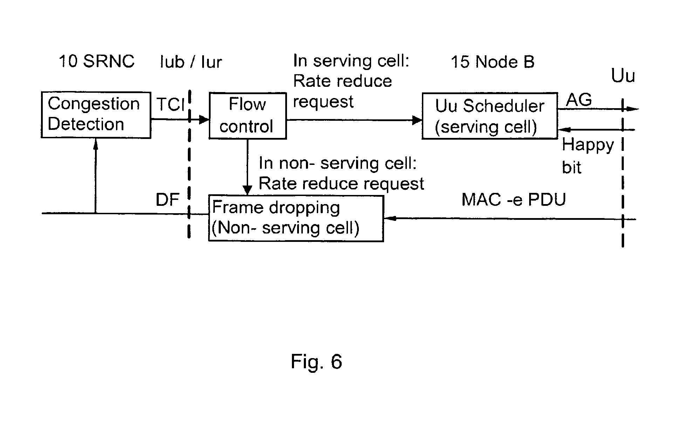

**Figure 6** illustrates a simplified architecture of EUL flow control. Whenever a Transport Network Layer Congestion Indication (TCI) is received by the radio base station 15, it may trigger a congestion action by the flow control entity. Depending on the severity of the congestion a reduce request with a coefficient Q may be issued. Different coefficients may be applied in case of soft and hard congestions: Qsoft, such as e.g. 90% and Qhard such as e.g. 50%. Depending on whether this flow is a serving cell flow or a non-serving cell flow, the rate reduce request may be issued to the Uu scheduler or to the Frame dropping functionality.

The present improvement may be applied in the serving cell case when the rate reduce request is sent to the Uu scheduler. Until the first rate reduce request is received, the Uu scheduler behaviour may not be affected by flow control. Upon receiving a rate reduce request, the scheduler may decrease the issued absolute grant according to the received Q. Additionally, when a rate reduce request has been issued for a flow, the scheduler may not be allowed to increase the absolute grant of that flow with more than a predefined increase rate r, which may be set to e.g. 40 kbps/s. Then, if *r* is increased with a factor periodically, e.g. multiplied with 1.2 every 400 ms, a similar behaviour may be achieved like the one described in the above sections for HSDPA. Thereby adaptation to a changed capacity in the transport network 20 may be significantly improved.

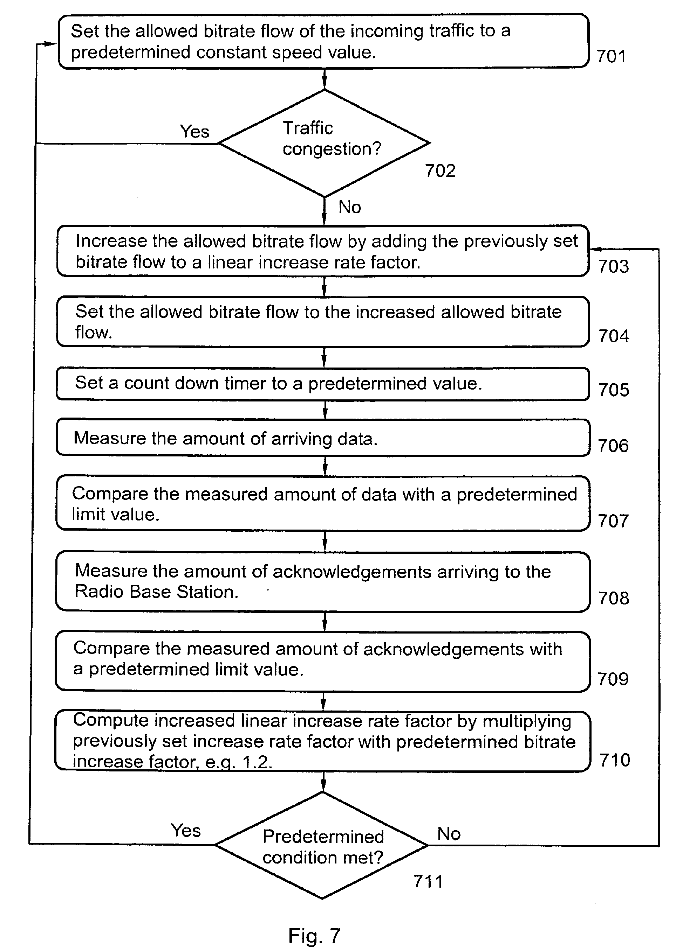

**Figure 7** is a flow chart illustrating embodiments of method steps 701-711 performed in a radio base station 15. The method aims at controlling the bitrate flow in a radio access network 11. The radio base station 15, which may be represented by a Node B, is comprised within the radio access network 11. The radio base station 15 is adapted to control the bitrate flow of the incoming traffic to the radio base station 15. The incoming traffic may come from the Radio Network Controller 10.

To appropriately control the bitrate flow in a radio access network 11, the method may comprise a number of method steps 701-711. It is however to be noted that some of the described method steps 701-711 are optional and only comprised within some embodiments. Further, it is to be noted that the method steps 701-711 may be performed in any arbitrary chronological order and that some of them, e.g. step 703 and step 705, or even all steps may be performed simultaneously or in an altered, arbitrarily rearranged, decomposed or even completely reversed chronological order. The method may comprise the following steps:

### Step 701

The allowed bitrate flow of the incoming traffic is set to a predetermined constant speed value. The predetermined constant speed value may be e.g. 40 kbps/s, according to some embodiments.

### Step 702

The occurrence of traffic congestion within the radio access network 11 is detected.

### Step 703

The allowed bitrate flow is increased by adding the previously set bitrate flow to a linear increase rate factor. Thus:
allowed bitrate flow = previously set bitrate flow + linear increase rate factor

### Step 704

The allowed bitrate flow is set to the increased allowed bitrate flow, which allowed bitrate flow where increased in method step 703.

### Step 705

This step is optional and may only be performed within some embodiments.

A timer may be set to a predetermined value. According to some optional embodiments, the predetermined value may be set to e.g. 400 ms.

### Step 706

This step is optional and may only be performed within some embodiments.

The amount of data arriving to the Radio Base Station 15 may be measured. The measured amount of data may according to some embodiments comprise the amount of PDU octets received since e.g. the last 100 ms tick.

### Step 707

This step is optional and may only be performed within some embodiments.

The measured amount of data that have arrived to the Radio Base Station 15 may be compared with a predetermined limit value.

### Step 708

The amount, or number, of acknowledgements arriving to the radio base station 15 may be measured.

### Step 709

The measured amount of acknowledgements that have arrived to the radio base station 15 may be compared with a predetermined limit value. This comparison may then be used in order to determine if a certain predetermined condition has been met.

### Step 710

An increased linear increase rate factor is computed by multiplying the previously set linear increase rate factor with a predetermined bitrate increase factor. The predetermined bitrate increase factor may e.g. be set to 1.2. However, the predetermined bitrate increase factor may alternatively be set to any other value > 1, such as e.g. 1.25, 1.3, 1.4, 1.5, 2, 5, 10 etc.

### Step 711

At least the steps of increasing 703 and setting 704 the allowed bitrate flow, at a predetermined periodicity are repeated until a predetermined condition is met.

The predetermined condition to be met may comprise at least one of the following parameters: an expired timer, an amount of arrived data, an amount of arrived acknowledgements or detected traffic congestion.

The predetermined periodicity may optionally be set to 400 ms.

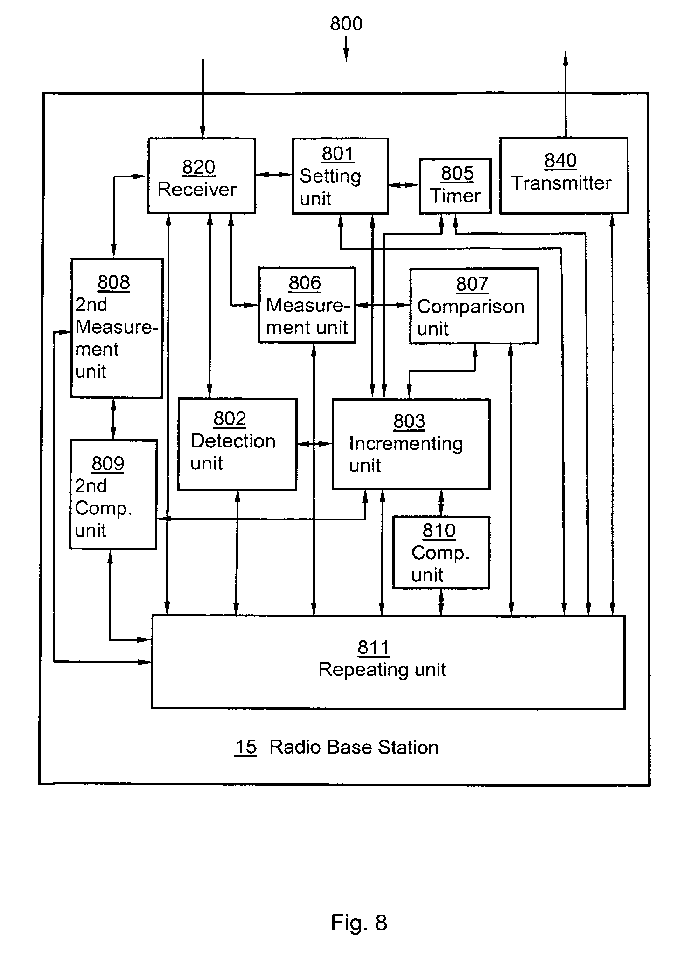

**Figure 8** is a block diagram illustrating embodiments of an arrangement 800 situated in a radio base station 15. The radio base station 15 may be represented by e.g. a Node B.

The arrangement 800 is configured to perform the method steps 701-711 for controlling the bitrate flow in a radio access network 11. The radio base station 15 is comprised within the radio access network 11. Further, the radio base station 15 is adapted to control the bitrate flow of the incoming traffic to the radio base station 15. The traffic may be incoming from the RNC 10.

For the sake of clarity, any internal electronics of the arrangement 800, not completely necessary for performing the present method has been omitted from Figure 8.

The arrangement 800 comprises a set unit 801. The set unit 801 is adapted to set the allowed bitrate flow of the incoming traffic to the radio base station 15. The set unit 801 may further be adapted to reset the increase rate to a constant speed if traffic congestion has been detected, according to some embodiments.

Further, the arrangement 800 also comprises a detection unit 802. The detection unit 802 is adapted to detect the occurrence of traffic congestion within the radio access network 11.

Also, the arrangement 800 further comprises an incrementing unit 803. The incrementing unit 803 is adapted to increase the allowed bitrate flow by adding the previously set bitrate flow to a linear increase rate factor.

In addition, the arrangement 800 comprises a computing unit 810. The computing unit 810 is adapted to compute an increased linear increase rate factor by multiplying the previously set linear increase rate factor with a predetermined bitrate increase factor.

The arrangement 800 also comprises a repeating unit 811. The repeating unit 811 is adapted to increase and set the allowed bitrate flow, at a predetermined periodicity until a predetermined condition is met.

The repeating unit 811 may be represented e.g. by a Central Processing Unit (CPU), a processor, a microprocessor, or processing logic that may interpret and execute instructions. The repeating unit 811 may perform data processing functions for inputting, outputting, and processing of data including data buffering and device control functions, such as call processing control, user interface control, or the like.

Further yet, the arrangement 800 may, according to some embodiments also comprise timer 805, which may be set to any predetermined value.

Still further, the arrangement 800 in addition may comprise a measurement unit 806. The measurement unit 806 may be adapted to measure the amount of data arriving to the radio base station 15, according to some embodiments.

Yet an optional feature that may be comprised within the arrangement 800 is a comparison unit 807. The comparison unit 807 may be adapted to compare the measured amount of data that had arrived to the radio base station 15 with a predetermined limit value. The measured amount of data may according to some embodiments comprise the amount of PDU octets received since the last 100 ms tick.

An optional extra feature that in addition may be comprised within the arrangement 800 is a second measurement unit 808. The second measurement unit 808 may be adapted to measure the amount, or number, of acknowledgements arriving to the radio base station 15.

According to some embodiments, the arrangement 800 further also may comprise a second comparison unit 809. The second comparison unit 809 may be adapted to compare the measured amount of acknowledgements that have arrived to the radio base station 15 with a certain predetermined limit value. This comparison may then be used in order to determine if a certain predetermined condition has been met.

Also, the arrangement 800 in addition also may comprise a receiving unit 820. The receiving unit 820 may be adapted to receive data from another entity within the communication system 100.

It may further be observed, that the arrangement 800 also optionally may comprise an optional transmitting unit 840. The transmitting unit 840 may be adapted to transmit data to another entity within the communication system 100.

It is to be noted that the described units 801-890 comprised within the arrangement 800 may be regarded as separate logical entities but not with necessity as separate physical entities. Any, some or all of the units 801-840 may be comprised or co-arranged within the same physical unit. However, in order to facilitate the understanding of the functionality of the arrangement 800, the comprised units 801-840 are illustrated as separate physical units in Figure 8.

### Some particular embodiments

The method in the radio base station 15 may be implemented through one or more processors 811 in the radio base station 15, together with computer program code for performing the functions of the present methods. The computer program code mentioned above may also be provided as a computer program product, for instance in the form of a data carrier carrying computer program code for performing the method according to the present invention when being loaded e.g. into the processor unit 811. The data carrier may be e.g. a CD ROM disc, a memory stick, or any other appropriate medium such as a disk or tape that can hold machine readable data. The computer program code can furthermore be provided as pure program code on a server and downloaded to the radio base station 15 remotely.

Further, a computer program comprising instruction sets for performing the method according to at least some of the method steps 701-711 may be used for implementing the previously described method in the radio base station 15.

The present invention may be embodied as a method and an arrangement in a radio base station 15, and/ or computer program products. Accordingly, the present invention may take the form of an entirely hardware embodiment, a software embodiment or an embodiment combining software and hardware aspects all generally referred to herein as a "circuit". Furthermore, the present invention may take the form of a computer program product on a computer-usable storage medium having computer-usable program code embodied in the medium. Any suitable computer readable medium may be utilized including hard disks, CD-ROMs, optical storage devices, a transmission media such as those supporting the Internet or an intranet, or magnetic storage devices.

Furthermore, the present methods are described in part above with reference to flowchart illustrations in Figure 4, Figure 5, Figure 6 and Figure 7 and/or block diagrams of an arrangement illustrated in Figure 8 and computer program products according to embodiments of the invention. It will be understood that each block of the flowchart illustrations and/or block diagrams, and combinations of blocks in the flowchart illustrations and/or block diagrams, may be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks in Figure 4, Figure 5, Figure 6, Figure 7 and/or Figure 8.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The terminology used in the detailed description of the particular exemplary embodiments illustrated in the accompanying drawings is not intended to be limiting of the invention.

## Claims

1. Method in a Radio Base Station (15) for controlling the bitrate flow in a Radio Access Network (11), the Radio Base Station (15) is comprised within the Radio Access Network (11), the Radio Base Station (15) is adapted to control the bitrate flow of the incoming traffic to the Radio Base Station (15), the method is **characterized by** the steps of:
*setting* (701) the allowed bitrate flow of the incoming traffic to a predetermined constant speed value,
determining (702) the occurrence of traffic congestion within the Radio Access Network (11),
if no traffic congestion is detected, *increasing* (703) the allowed bitrate flow by adding the previously set bitrate flow to a linear increase rate factor,
*setting* (704) the allowed bitrate flow to the increased allowed bitrate flow,
*computing* (710) an increased linear increase rate factor by multiplying the previously set linear increase rate factor with a predetermined bitrate increase factor,
*repeating* (711) the steps of *increasing* (703) and *setting* (704) the allowed bitrate flow, at a predetermined periodicity until a predetermined condition is met.

2. Method according to claim 1, wherein the predetermined condition to be met comprises at least one of the following parameters: an expired timer, an amount of arrived data, an amount of arrived acknowledgements or detected traffic congestion.

3. Method according to claim 2, comprising the further step of:
*setting* (705) a timer to a predetermined value.

4. Method according to any of the claims 1-3, wherein the predetermined periodicity is set to 400 ms.

5. Method according to any of the previous claims 1-4, comprising the further step of:
*measuring* (706) the amount of data arriving to the Radio Base Station (15), and
*comparing* (707) the measured amount of data with a predetermined limit value.

6. Method according to any of the previous claims 1-5, comprising the further step of:
*measuring* (708) the amount of acknowledgements arriving to the Radio Base Station (15), and
*comparing* (709) the measured amount of acknowledgements with a predetermined limit value.

7. Method according to any of the previous claims 1-6, wherein the predetermined bitrate increase factor is set to 1.2.

8. Method according to any of the previous claims 1-7, wherein the method is adapted to be performed within a High Speed Downlink Packet Access "HSDPA" Flow Control architecture.

9. Method according to any of the previous claims 1-7, wherein the method is adapted to be performed within an Enhanced UpLink "EUL" Flow Control architecture.

10. Method according to any of the previous claims 1-9, wherein the method is adapted to be performed within a window based flow control scheme.

11. Arrangement (800) in a Radio Base Station (15) for controlling the bitrate flow in a Radio Access Network (11), the Radio Base Station (15) is comprised within the Radio Access Network (11), the Radio Base Station (15) is adapted to control the bitrate flow of the incoming traffic to the Radio Base Station (15), the arrangement (800) is **characterized by**:
a set unit (801), adapted to set the allowed bitrate flow of the incoming traffic,
a detection unit (802), adapted to determine the occurrence of traffic congestion within the Radio Access Network (11),
an incrementing unit (803), adapted to increase the allowed bitrate flow by adding the previously set bitrate flow to a linear increase rate factor,
a computing unit (810), adapted to compute an increased linear increase rate factor by multiplying the previously set linear increase rate factor with a predetermined bitrate increase factor, and
a repeating unit (811), adapted to increase and set the allowed bitrate flow, at a predetermined periodicity until a predetermined condition is met.

## Patentansprüche

1. Verfahren in einer Funkbasisstation (15) zum Steuern des Bitratenstroms in einem Funkzugangsnetz (11), wobei die Funkbasisstation (15) innerhalb des Funkzugangsnetzes (11) enthalten ist und die Funkbasisstation (15) dazu angepasst ist, den Bitratenstrom des eingehenden Verkehrs an der Funkbasisstation (15) zu steuern, wobei das Verfahren durch die folgenden Schritte gekennzeichnet ist:
Einstellen (701) des erlaubten Bitratenstroms des eingehenden Verkehrs auf einen vorgegebenen konstanten Geschwindigkeitswert,
Bestimmen (702) des Auftretens von Verkehrsstau innerhalb des Funkzugangsnetzes (11),
falls kein Verkehrsstau detektiert wird, Erhöhen (703) des erlaubten Bitratenstroms durch Addieren des vorher eingestellten Bitratenstroms zu einem Linearerhöhungs-Ratenfaktor,
Einstellen (704) des erlaubten Bitratenstroms auf den erhöhten erlaubten Bitratenstrom,
Berechnen (710) eines erhöhten Linearerhöhungs-Ratenfaktors durch Multiplizieren des vorher eingestellten Linearerhöhungs-Ratenfaktors mit einem vorgegebenen Bitraten-Erhöhungsfaktor,
Wiederholen (711) der Schritte des Erhöhens (703) und Einstellens (704) des erlaubten Bitratenstroms mit einer vorgegebenen Periodizität, bis eine vorgegebene Bedingung erfüllt ist.

2. Verfahren nach Anspruch 1, worin die zu erfüllende vorgegebene Bedingung mindestens einen der folgenden Parameter umfasst: einen abgelaufenen Timer, eine Menge von eingegangenen Daten, eine Menge von eingegangenen ACKs oder detektierten Verkehrsstau.

3. Verfahren nach Anspruch 2, den folgenden weiteren Schritt umfassend:
Einstellen (705) eines Timers auf einen vorgegebenen Wert.

4. Verfahren nach einem der Ansprüche 1-3, worin die vorgegebene Periodizität auf 400 ms eingestellt wird.

5. Verfahren nach einem der vorherigen Ansprüche 1-4, den folgenden weiteren Schritt umfassend:
Messen (706) der Menge von Daten, die in der Funkbasisstation (15) eingehen, und
Vergleichen (707) der gemessenen Menge von Daten mit einem vorgegebenen Grenzwert.

6. Verfahren nach einem der vorherigen Ansprüche 1-5, den folgenden weiteren Schritt umfassend:
Messen (708) der Menge von ACKs, die in der Funkbasisstation (15) eingehen, und
Vergleichen (709) der gemessenen Menge von ACKs mit einem vorgegebenen Grenzwert.

7. Verfahren nach einem der vorherigen Ansprüche 1-6, worin der vorgegebene Bitraten-Erhöhungsfaktor auf 1,2 eingestellt wird.

8. Verfahren nach einem der vorherigen Ansprüche 1-7, worin das Verfahren dazu angepasst ist, innerhalb einer HSDPA(Hochgeschwindigkeits-Downlink-Paketzugriff)-Stromsteuerungsarchitektur ausgeführt zu werden.

9. Verfahren nach einem der vorherigen Ansprüche 1-7, worin das Verfahren dazu angepasst ist, innerhalb einer EUL(verbesserter Uplink)-Stromsteuerungsarchitektur ausgeführt zu werden.

10. Verfahren nach einem der vorherigen Ansprüche 1-9, worin das Verfahren dazu angepasst ist, innerhalb eines windowsbasierten Stromregelungsschemas ausgeführt zu werden.

11. Anordnung (800) in einer Funkbasisstation (15) zum Steuern des Bitratenstroms in einem Funkzugangsnetz (11), wobei die Funkbasisstation (15) innerhalb des Funkzugangsnetzes (11) enthalten ist und die Funkbasisstation (15) dazu angepasst ist, den Bitratenstrom des eingehenden Verkehrs an der Funkbasisstation (15) zu steuern, wobei die Anordnung (800) **gekennzeichnet ist durch**:
eine Einstelleinheit (801), angepasst zum Einstellen des erlaubten Bitratenstroms des eingehenden Verkehrs,
eine Detektionseinheit (802), angepasst zum Bestimmen des Auftretens von Verkehrsstau innerhalb des Funkzugangsnetzes (11),
eine Inkrementiereinheit (803), angepasst zum Erhöhen des erlaubten Bitratenstroms **durch** Addieren des vorher eingestellten Bitratenstroms zu einem Linearerhöhungs-Ratenfaktor,
eine Recheneinheit (810), angepasst zum Berechnen eines erhöhten Linearerhöhungs-Ratenfaktors **durch** Multiplizieren des vorher eingestellten Linearerhöhungs-Ratenfaktors mit einem vorgegebenen Bitraten-Erhöhungsfaktor, und
eine Wiederholungseinheit (811), angepasst zum Erhöhen und Einstellen des erlaubten Bitratenstroms mit einer vorgegebenen Periodizität, bis eine vorgegebene Bedingung erfüllt ist.

## Revendications

1. Procédé, mis en oeuvre dans une station de base radio (15), de commande du débit binaire dans un réseau d'accès radio (11), la station de base radio (15) étant incluse dans le réseau d'accès radio (11), la station de base radio (15) étant apte à commander le débit binaire du trafic entrant au niveau de la station de base radio (15), et le procédé étant **caractérisé par** les étapes ci-dessous consistant à :
*régler* (701) le débit binaire autorisé du trafic entrant sur une valeur de vitesse constante prédéterminée ;
*déterminer* (702) l'occurrence d'un encombrement de trafic au sein du réseau d'accès radio (11) ;
si aucun encombrement de trafic n'est détecté, *augmenter* (703) le débit binaire autorisé en ajoutant le débit binaire réglé précédemment à un facteur de taux d'augmentation linéaire ;
*régler* (704) le débit binaire autorisé sur le débit binaire autorisé augmenté ;
*calculer informatiquement* (710) un facteur de taux d'augmentation linéaire augmenté, en multipliant le facteur de taux d'augmentation linéaire réglé précédemment par un facteur d'augmentation de débit binaire prédéterminé ;
*répéter* (711) les étapes d'*augmentation* (703) et de *réglage* (704) du débit binaire autorisé, avec une périodicité prédéterminée, jusqu'à ce qu'une condition prédéterminée soit satisfaite.

2. Procédé selon la revendication 1, dans lequel la condition prédéterminée devant être satisfaite comprend au moins l'un des paramètres suivants : un temporisateur expiré, une quantité de données arrivées, une quantité d'accusés de réception arrivés ou un encombrement de trafic détecté.

3. Procédé selon la revendication 2, comprenant l'étape supplémentaire ci-dessous consistant à :
*régler* (705) un temporisateur sur une valeur prédéterminée.

4. Procédé selon l'une quelconque des revendications 1 à 3, dans lequel la périodicité prédéterminée est réglée sur 400 ms.

5. Procédé selon l'une quelconque des revendications 1 à 4, comprenant les étapes supplémentaires ci-dessous consistant à :
*mesurer* (706) la quantité de données arrivant au niveau de la station de base radio (15) ; et
*comparer* (707) la quantité de données mesurée à une valeur limite prédéterminée.

6. Procédé selon l'une quelconque des revendications 1 à 5, comprenant l'étape supplémentaire ci-dessous consistant à :
*mesurer* (708) la quantité d'accusés de réception arrivant au niveau de la station de base radio (15) ; et
*comparer* (709) la quantité d'accusés de réception mesurée à une valeur limite prédéterminée.

7. Procédé selon l'une quelconque des revendications 1 à 6, dans lequel le facteur d'augmentation de débit binaire prédéterminé est réglé sur 1,2.

8. Procédé selon l'une quelconque des revendications 1 à 7, dans lequel le procédé est apte à être mis en oeuvre dans une architecture de commande de flux de type accès par paquets en liaison descendante haut débit, « HSDPA ».

9. Procédé selon l'une quelconque des revendications 1 à 7, dans lequel le procédé est apte à être mis en oeuvre dans une architecture de commande de flux de type liaison montante améliorée « EUL ».

10. Procédé selon l'une quelconque des revendications 1 à 9, dans lequel le procédé est apte à être mis en oeuvre dans un schéma de commande de flux à base de fenêtres.

11. Agencement (800) dans une station de base radio (15) pour commander le débit binaire dans un réseau d'accès radio (11), la station de base radio (15) étant incluse dans le réseau d'accès radio (11), la station de base radio (15) étant apte à commander le débit binaire du trafic entrant au niveau de la station de base radio (15), et l'agencement (800) étant **caractérisé par** :
une unité de réglage (801), apte à régler le débit binaire autorisé du trafic entrant ;
une unité de détection (802), apte à déterminer l'occurrence d'un encombrement de trafic au sein du réseau d'accès radio (11) ;
une unité d'incrémentation (803), apte à augmenter le débit binaire autorisé, en ajoutant le débit binaire réglé précédemment à un facteur de taux d'augmentation linéaire ;
une unité de calcul informatique (810), apte à calculer informatiquement un facteur de taux d'augmentation linéaire augmenté, en multipliant le facteur de taux d'augmentation linéaire réglé précédemment par un facteur d'augmentation de débit binaire prédéterminé ; et
une unité de répétition (811), apte à augmenter et à régler le débit binaire autorisé, avec une périodicité prédéterminée, jusqu'à ce qu'une condition prédéterminée soit satisfaite.
